(19) Europäisches Patentamt
European Patent Office
Office européen des brevets

(11) EP 1 666 912 A1

(12) EUROPÄISCHE PATENTANMELDUNG

(43) Veröffentlichungstag:
**07.06.2006 Patentblatt 2006/23**

(51) Int Cl.:
***G01S 5/06*** *(2006.01)*

(21) Anmeldenummer: **04028453.1**

(22) Anmeldetag: **01.12.2004**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **Abatec Electronic AG**
**4844 Regau (AT)**

(72) Erfinder:
- **Fischer, Alexander**
  **1230 Wien (AT)**
- **Pourvoyeur, Klaus**
  **6600 Pflach (AT)**
- **Stelzer, Andreas**
  **4171 St. Peter/Wbg. (AT)**

(74) Vertreter: **Jacoby, Georg et al**
**Samson & Partner,**
**Widenmayerstrasse 5**
**80538 München (DE)**

# (54) Verfahren und System zum Bestimmen der Position eines Objektes

(57) Die Erfindung betrifft ein Positionsbestimmungssystem und ein Verfahren zum Bestimmen der Position eines Objektes (2) mittels einer Anzahl von Basisstationen (1) mit bekannten Positionen und mittels eines Referenzobjekts (4) mit bekannter Position. Das Referenzobjekt (4)sendet ein Referenzsignal an die Basisstationen (1). Durch den Empfang des Referenzsignals ausgelöst, sendet eine Haupt-Basisstation (3), die von der Anzahl der Basisstationen (1) umfaßt ist, ein Aktivierungssignal an das Objekt (2). Durch den Empfang des Aktivierungssignals ausgelöst sendet das Objekt (2) ein Objektsignal an die Basisstationen (1). Jede Basisstation (1) mißt die Zeitdifferenz zwischen den beiden Empfangszeitpunkten des Referenzsignals und des Objektsignals. Die Position des Objektes (2) wird aus den bekannten Positionen der Basisstationen (1) und des Referenzobjektes (4) sowie aus den gemessenen Zeitdifferenzen unter Berücksichtigung eines Zeitversatzes bestimmt. Der Zeitversatz entspricht im wesentlichen der unbekannten Zeitdauer zwischen dem Empfangszeitpunkt des Referenzsignals und dem Sendezeitpunkt des Aktivierungssignals in der Haupt-Basisstation (1) und der unbekannten Zeitdauer zwischen dem Empfangszeitpunkt des Aktivierungssignals und dem Sendezeitpunkt des Objektsignals im Objekt (2).

1
1
1
5
5
5
8
8
8
2
4
7
3
6
8
8
8
5
5
5
1
1
1

FIGUR 1



Printed by Jouve, 75001 PARIS (FR)

## Beschreibung

Die Erfindung betrifft ein Verfahren, mit dem die Position eines Objektes mittels einer Anzahl von Basisstationen mit bekannten Positionen und mittels eines Referenzobjekts mit bekannter Position ermittelt werden kann. Die Erfindung betrifft weiterhin ein Positionsbestimmungssystem mit einer Anzahl an Basisstationen, einem am Objekt angeordneten Objekttransponder sowie einem Referenztransponder.

Bei vielen Anwendungen ist es wünschenswert, die Position eines Objektes lokal möglichst genau zu bestimmen. Im Sportbereich kann der zeitliche Verlauf von Positionen von Sportlern analysiert werden, beim Motorsport von Fahrzeugpositionen und daraus abgeleitet der zeitliche Verlauf von Beschleunigungen, Geschwindigkeiten und Bremsverhalten, beim Skisport können zwei aufeinanderfolgende Läufer verglichen werden, bei Rennen jeglicher Art können Frühstarts erkannt, beliebige Zeitdauern bestimmt und daraus Rundenzeiten abgeleitet werden und dgl..

Aus der gattungsgemäßen Druckschrift WO 02/37134 A2 ist die Bestimmung der Position eines Objektes bekannt, bei der ein Referenztransponder ein Signal an mehrere Basisstation sendet, die nach dessen Empfang ihre internen Zeitzähler starten. Eine ausgewählte Basisstation sendet dann ein Auslösesignal an das zu vermessende Objekt. Ein Objekttransponder am Objekt sendet nach Empfang des Auslösesignals ein Signal an die Basisstationen, die nach dessen Empfang ihre Zeitzähler stoppen und die Ankunftszeit dieses Signals messen. Die Position des Objektes wird dann aus den Positionen der Basisstationen und den paarweisen Differenzen von jeweils zwei Ankunftszeiten zweier Basisstationen bestimmt.

Es ist Aufgabe der vorliegenden Erfindung, ein verbessertes Positionsbestimmungsverfahren sowie eine verbesserte Positionsbestimmungsvorrichtung zur Verfügung zu stellen, mit der eine genauere und stabilere Positionsbestimmung möglich ist.

Diese Aufgabe wird durch das Verfahren nach Anspruch 1 und durch das Positionsbestimmungssystem nach Anspruch 24 gelöst. Weitere vorteilhafte Ausgestaltungen der Erfindungen sind in den abhängigen Ansprüchen beschrieben.

Bevorzugte Ausführungsformen der Erfindung werden nachfolgend anhand der beigefügten Zeichnung ausführlicher beschrieben.

Es zeigen:

- Figur 1 eine schematische Ansicht des Positionsbestimmungssystems;
- Figur 2 eine Vektordarstellung der für die Positionsbestimmung des Objektes erforderlichen Vektoren zwischen den Basisstationen, dem Referenzobjekt und dem zu vermessenden Objekt;
- Figur 3 ein Blockschaltbild einer Auswerteeinheit des Positionsbestimmungssystems; und
- Figur 4 eine schematische Ansicht der Antennenanordnung in einer Basisstation und dem Referenzobjekt.

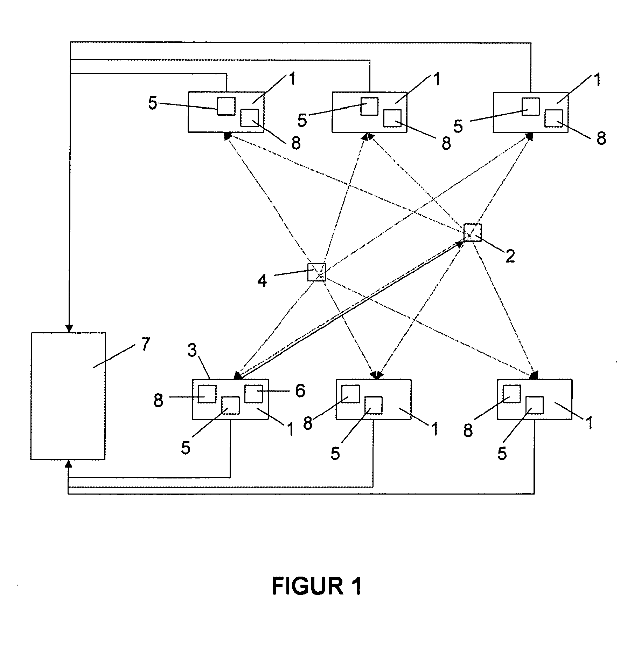

Figur 1 zeigt schematisch ein Positionsbestimmungssystem, das eine Anzahl von Basisstationen 1 umfaßt, die in einem Bereich angeordnet sind, in dem die Positionen eines oder mehrerer Objekte 2 bestimmt werden sollen. Die Basisstationen 1 befinden sich an bekannten, bevorzugt festen Standorten. Sie können beispielsweise an den Rändern des Bereichs angeordnet sein, in dem sich das Objekt 2 erwartungsgemäß bewegt. Selbstverständlich kann sich das Objekt 2 auch außerhalb dieses Bereichs befinden oder allgemein im Raum bewegen, solange es sich im Empfangsbereich einer ausreichenden Anzahl von Basisstationen 1 befindet. Die Basisstationen 1 sollten in dem Bereich, in dem die Position des Objektes 2 bestimmt werden soll, möglichst verteilt angeordnet sein, um eine bestmögliche Genauigkeit bei der Positionsbestimmung zu erreichen.

Innerhalb des Bereichs befindet sich weiterhin ein Referenzobjekt 4, das eine bekannte oder genau ermittelbare Position bezüglich der Basisstationen 1 aufweist. Jede Basisstation 1 weist eine Empfangseinrichtung 5 auf, die ein vom Referenzobjekt 4 ausgesendetes Referenzsignal und ein vom Objekt 2 ausgesendetes Objektsignal empfängt. Jede Basisstation 1 weist weiterhin eine Zeitmeßeinheit 8 auf, die die Zeitdauer zwischen den Empfangszeitpunkten des Referenzsignals und des Objektsignals mißt. Im Gegensatz zu bisherigen Positionsbestimmungsverfahren findet sich in keiner der Basisstationen 1 ein synchronisierter Zeitgeber. Die Basisstationen 1 sind entweder über eine Funk- oder Leitungsverbindung mit einer Auswerteeinheit 7 verbunden, die die von den Basisstationen 1 gemessenen Zeitdauern empfängt und daraus die Position des Objektes 2 ermittelt.

Eine der Basisstationen 1 ist als Haupt-Basisstation 3 fest ausgebildet oder wird unter den Basisstationen 1 nach bestimmten Kriterien ausgewählt (z.B. durch eine nachfolgend beschriebene Stationsauswahleinheit). Beispielsweise kann immer die Basisstation 1 als Haupt-Basisstation 3 ausgewählt werden, die dem Objekt 2 am nächsten ist. Die Haupt-Basisstation 3 weist eine Sendeeinrichtung 6 auf, die nach Empfang des Referenzsignals ein Aktivierungssignal an das Objekt 2 sendet. Soll die Position von mehreren Objekten 2 bestimmt werden, so kann die Haupt-Basisstation 3 jedes der Objekte 2 durch ein kodiertes Signal gezielt ansprechen. Pro Meßzyklus wird dabei immer nur ein Objekt 2 angesprochen und somit immer nur die Position des angesprochenen Objektes 2 gemessen.

Figur 1 verdeutlicht die Signalverläufe des Positionsbestimmungsverfahrens mit Hilfe von verschiedenartig dargestellten Pfeilen. Eine Messung der Position des Objektes 2 wird ausgelöst, indem eine Sendeeinrichtung 5 im Referenzobjekt 4 das Referenzsignal aussendet. Dies ist durch den gepunktet dargestellten Pfeil, der vom Referenzobjekt 4 zu den Basisstationen 1 zeigt, veranschaulicht. Üblicherweise sendet das Referenzobjekt 4 das Referenzsignal periodisch oder zu vorgegebenen Zeitpunkten aus, und initiiert damit jedes Mal eine neue Messung in allen Basisstationen 1. Das Referenzsignal wird ebenfalls von der Haupt-Basisstation 3 mit Hilfe der entsprechenden Empfangseinrichtung 5 empfangen. Die Haupt-Basisstation 3 erzeugt nach dessen Empfang das Aktivierungssignal und sendet es an das Objekt 2 (strichlierte Linie). Das Aktivierungssignal enthält eine Identifikationsinformation, mit der das zu vermessende Objekt 2 gezielt angesprochen werden kann. Befinden sich mehrere Objekte 2 innerhalb des Bereiches, so wird jedes der Objekte 2 durch die Identifikationsinformation eindeutig identifiziert. Ein Objekttransponder im Objekt 2 empfängt das Aktivierungssignal und vergleicht die darin enthaltene Identifikationsinformation mit seiner Identifikation. Wird der Objekttransponder identifiziert, so sendet er das Objektsignal aus (veranschaulicht als gestrichelter Pfeil), das im wesentlichen von jeder Basisstation 1 empfangen wird.

Kann eine Basisstation 1 aufgrund ihrer Position relativ zum Objekt 2 das Objektsignal nicht innerhalb eines vorgegebenen Zeitraums empfangen, so sendet diese Basisstation 1 eine entsprechende Kein-Signal-Empfangen-Information an die Auswerteeinheit 7, damit sie bei der Positionsbestimmung des Objektes 2 unberücksichtigt bleibt.

Das Referenzsignal und das Objektsignal können als Frequenzrampe mit gleicher Steilheit ausgebildet sein. Die vom Referenztransponder gesendete Frequenzrampe hat beispielsweise eine Dauer von 500 $\mu$s und eine Wiederholrate von 1 ms, wird also nach einer Pause von 500 $\mu$s wiederholt gesendet. Die Frequenzrampe kann im ISM-Band gesendet werden, in einem Frequenzbereich von beispielsweise 5.725-5.875 GHz. Damit jede Basisstation 1 die Frequenzen der vom Referenztransponder und vom Objekttransponder ausgesendeten Frequenzrampen sicher unterscheiden kann, sendet der Objekttransponder die Frequenzrampe nach Empfang des Aktivierungssignals verzögert aus.

Bei Verwendung von Frequenzrampen sowohl für den Referenztransponder als auch für den Objekttransponder sind Mehrfachzugriffe (das gleichzeitige Ansprechen von mehreren Objekttranspondern) nicht ohne weiteres möglich. Daher sollten pro Meßzyklus immer nur der Referenztransponder und ein einzelner Objekttransponder aktiv sein, da sich sonst die einzelnen Objekttransponder gegenseitig stören würden. Werden die Signale hingegen kodiert, können auch mehrere Objekttransponder gleichzeitig aktiv sein. Mit Korrelationsmethoden werden dann die einzelnen Objektsignale wieder voneinander getrennt.

Das Aktivierungssignal kann ein Trigger-Telegramm beispielsweise in Form einer FSK-modulierten (FSK = "frequency shift keying") Signalnachricht sein, das auf einer Trägerfrequenz am oberen Ende des Frequenzbandes für die Frequenzrampen des Referenzsignals und des Objektsignals gesendet wird (z.B. 5.867 GHz). Das Trigger-Telegramm enthält einen Header und die Identifikationsinformation, die jeden Objekttransponder eindeutig identifiziert. Die vom Objekttransponder ausgesendete Frequenzrampe kann auch Träger für weitere Daten sein (z.B. Sensordaten des Objektes 2, siehe unten).

Das von den Basisstationen 1 periodisch empfangene Referenzsignal synchronisiert einen stationsinternen Oszillator. Nach der Synchronisierung laufen die beiden Frequenzrampen des internen Oszillators und des Referenzsignals mit einer definierten Beziehung zueinander. Die Hauptbasisstation 1 sendet dann synchron zum Referenzsignal das Aktivierungssignal so an den Objekttransponder, daß das Objektsignal innerhalb des Meßbereichs mit einer anderen Frequenz als das Referenzsignal empfangen wird. Jede Basisstation 1 mischt dann das gleichzeitig empfangene Referenz- und Objektsignal mit der Frequenzrampe des internen Oszillators und ermittelt den Mittenabstand der beiden im Signalspektrum des Mischsignals erhaltenen Pulse. Aus dem Mittenabstand und der Steilheit der Frequenzrampen wird die Laufzeitdifferenz zwischen Referenz- und Objektsignal mittels eines Frequenzschätzverfahrens (z.B. Fouriertransformation, etc.) berechnet. Dieses Prinzip einer Zeitdifferenzmessung ist aus dem Stand der Technik wohlbekannt, auf den hier Bezug genommen wird.

Zunächst wird die Güte der Messergebnisse der einzelnen Basisstationen 1 beurteilt. Hierzu werden die Spektraldaten der einzelnen Messungen charakterisiert (z.B. Peakbreite, Auftreten von Doppelpeaks, etc.). Diese Güteinformationen wird bei der nachfolgenden Positionsbestimmung und in der Auswerteeinheit 7 verwendet (siehe unten).

Die Position des Objekts 2 sowie ein Zeitversatz werden aus den bekannten Positionen des Referenzobjektes 4 und der Basisstationen 1 sowie aus den gemessenen Laufzeitdifferenzen ermittelt. Der Zeitversatz resultiert aus Signallaufzeiten, die nicht nur auf den Übertragungsstrecken im Raum entstehen. So entsteht ein Zeitversatz zwischen dem Empfang des Referenzsignals in der Haupt-Basisstation 3 und dem Aussenden des daraufhin generierten Aktivierungssignals. Ein weiterer Zeitversatz entsteht im Objekttransponder für den Empfang des Aktivierungssignals, die Überprüfung der darin enthaltenen Identifikationsinformation und das verzögerte Aussenden des Objektsignals (siehe oben). Der Zeitversatz ist bei der Zeitmessung zwar nicht bekannt, aber für alle Basisstationen 1 gleich. Mit einem geeigneten Aufbau der elektronischen Schaltungen in den Basisstationen 1 und im Objekttransponder könnte der Zeitversatz zwar minimiert werden, er darf jedoch nicht vollständig verschwinden, da Referenz- und Objektsignal sich nicht gegenseitig beeinflussen dürfen (siehe oben). Aufgrund der hohen Ausbreitungsgeschwindigkeit elektromagnetischer Wellen (in Luft nahezu Vakuumlichtgeschwindigkeit) bewirken schon kleinste Zeitversätze große Abweichungen der gemessenen Weglängen zwischen Referenzobjekt 4 und Objekt 2. Für eine genaue Positionsbestimmung muß der Zeitversatz daher möglichst genau berücksichtigt werden. Bei Kenntnis des Zeitversatzes lassen sich aus den gemessenen Zeitdifferenzen die reinen Signallaufzeiten auf den Übertragungsstrecken im Raum ermitteln, die wiederum im wesentlichen der radialen Entfernung zwischen Referenzobjekt 4 und Objekt 2 relativ zur radialen Entfernung zwischen Referenzobjekt 4 und Basisstation 1 entsprechen.

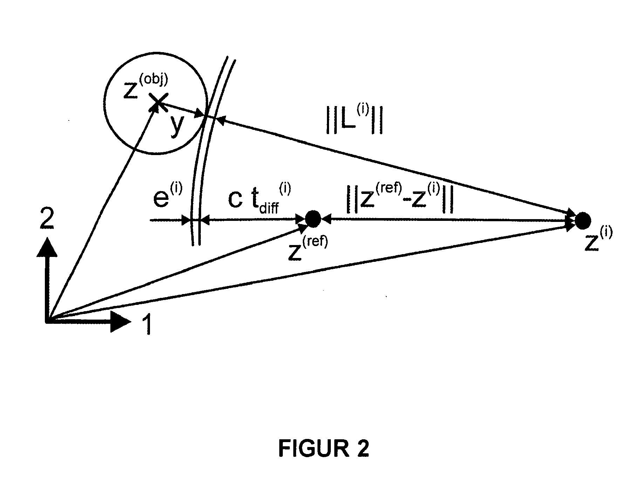

Bei der Positionsbestimmung werden die Strecken ermittelt, die dem Laufzeitunterschied des Referenzsignals und Objektsignals in der jeweiligen Basisstation 1 entsprechen. Figur 2 dient der Veranschaulichung des nachfolgend beschriebenen Berechnungsverfahrens. Dieses Verfahren setzt für eine bestimmte Basisstation (j) folgende Größen zueinander in Beziehung:

- die radiale Entfernung $c\,t_{diff}^{(j)}$ zwischen der Position $z^{(obj)}$ des Objektes 2 und der Position $z^{(ref)}$ des Referenzobjektes 4,
- den unbekannten, dem Zeitversatz entsprechenden Strekkenversatzes y, der während einer Messung konstant und für alle Basisstationen 1 gleich ist, und
- den für jede Basisstation 1 individuellen Meßfehler $e^{(j)}$, der die Meßungenauigkeit der Zeitmessung für jede Basisstation 1 berücksichtigt.

Hierzu wird die in jeder Basisstation 1 gemessene Zeitdifferenz $t_{diff}^{(j)}$ zwischen Empfang des Referenzsignals und Objektsignals mit der Ausbreitungsgeschwindigkeit c des elektromagnetischen Signals multipliziert, die im wesentlichen der Vakuumlichtgeschwindigkeit entspricht. Ziel ist es, die Objektposition

$$z^{(obj)} = \left[z_1^{(obj)}, z_2^{(obj)}, z_3^{(obj)}\right]^T \tag{1}$$

unter Berücksichtigung des Streckenversatzes y zu bestimmen. Die Positionen des Referenzobjektes

$$z^{(ref)} = \left[z_1^{(ref)}, z_2^{(ref)}, z_3^{(ref)}\right]^T \tag{2}$$

sowie der Basisstationen

$$z^{(j)} = \left[z_1^{(j)}, z_2^{(j)}, z_3^{(j)}\right]^T \tag{3}$$

sind gegeben, wobei der Index *j* die jeweilige Basisstation 1 beschreibt und von 1 bis N, der Gesamtzahl der Basisstationen 1 läuft. Für jede Basisstation 1 kann damit die Gleichung

$$\left\|z^{(obj)} - z^{(j)}\right\| - \left\|z^{(ref)} - z^{(j)}\right\| = c\,t_{diff}^{(j)} + y + e^{(j)} \tag{4}$$

aufgestellt werden. Für N Basisstationen ergeben sich daher N Gleichungen. Bedingt durch den unbekannten Strekkenversatz y beinhaltet eine Einzelmessung $t_{diff}^{(j)}$ keinerlei Information über die Objektposition. Erst die Messungen $t_{diff}^{(j)}$ mehrerer Basisstationen 1 ermöglichen eine Aussage über die Objektposition. Wird der Meßgröße $t_{diff}^{(j)}$ die Entfernung zwischen der jeweiligen Basisstation 1 und dem Referenzobjekt 4 aufgeschlagen, so stellt diese neue Größe $\|L^{(j)}\|$ die Entfernung des Objekts 2 zur jeweiligen Basisstation 1 zuzüglich des Streckenversatzes y dar:

$$\left\|L^{(j)}\right\| = \left\|z^{(ref)} - z^{(j)}\right\| + c\,t_{diff}^{(j)} \qquad (5)$$

Es werden also insgesamt wenigstens die Zeitmessungen $t_{diff}^{(j)}$ von vier verschiedenen Basisstationen 1 benötigt, um die Position des Objektes 2 im Raum zu bestimmen (für die Positionsbestimmung in einer Ebene oder auf einer Linie werden nur 3 bzw. 2 Zeitmessungen $t_{diff}^{(j)}$ benötigt). Stehen Meßsignale $t_{diff}^{(j)}$ von mehr als vier Basisstationen 1 zur Verfügung, ist das resultierende Gleichungssystem für die drei Objektkoordinaten sowie dem Streckenversatz y überbestimmt.

Bei einem ersten Verfahren zum Lösen dieses (überbestimmten) Gleichungssystem wird das globale Minimum eines Gütefunktionals J gesucht, das durch die Summe der gewichteten quadratischen Meßfehler $e^{(j)}$ der einzelnen Basisstationen 1 gebildet wird. Hierzu wird Gleichung (4) für jede Basisstation 1 nach dem Meßfehler $e^{(j)}$ aufgelöst. Mit anderen Worten werden die Objektposition $z^{(obj)}$ sowie der Streckenversatz y also dahingehend bestimmt, daß die Summe der gewichteten quadratischen Meßfehler $e^{(j)}$ minimal wird,

$$J\left(z^{(obj)}, y\right) = \sum_{j=1}^{N} k^{(j)}\left(e^{(j)}\right)^2 = \sum_{j=1}^{N} k^{(j)}\left(\left\|z^{(obj)} - z^{(j)}\right\| - \left\|z^{(ref)} - z^{(j)}\right\| - c\,t_{diff}^{(j)} - y\right)^2 \rightarrow \min_{\substack{z^{(obj)}\\ y}} \qquad (6)$$

wobei die Gewichtungswerte $k^{(j)}$ die Güte der Messung $t_{diff}^{(j)}$ in der jeweiligen Basisstation 1 klassifizieren. Für ein globales Minimum des Gütefunktionals *J* müssen dessen partielle Ableitungen nach den drei Objektkoordinaten und dem Streckenversatz y gleich Null sein. Es entsteht dabei ein nichtlineares Gleichungssystem von vier Gleichungen mit vier Unbekannten:

$$f_1\left(z^{(obj)}, y\right) = \frac{\partial J\left(z^{(obj)}, y\right)}{\partial z_1^{(obj)}} = \sum_{j=1}^{N} k^{(j)}\left(z_1^{(obj)} - z_1^{(j)}\right)\left(\frac{\left\|L^{(j)}\right\| + y}{\left\|z^{(obj)} - z^{(j)}\right\|} - 1\right) = 0$$

$$f_2\left(z^{(obj)}, y\right) = \frac{\partial J\left(z^{(obj)}, y\right)}{\partial z_2^{(obj)}} = \sum_{j=1}^{N} k^{(j)}\left(z_2^{(obj)} - z_2^{(j)}\right)\left(\frac{\left\|L^{(j)}\right\| + y}{\left\|z^{(obj)} - z^{(j)}\right\|} - 1\right) = 0$$

$$f_3\left(z^{(obj)}, y\right) = \frac{\partial J\left(z^{(obj)}, y\right)}{\partial z_3^{(obj)}} = \sum_{j=1}^{N} k^{(j)}\left(z_3^{(obj)} - z_3^{(j)}\right)\left(\frac{\left\|L^{(j)}\right\| + y}{\left\|z^{(obj)} - z^{(j)}\right\|} - 1\right) = 0$$

$$f_4\left(z^{(obj)}, y\right) = \frac{\partial J\left(z^{(obj)}, y\right)}{\partial y} = \sum_{j=1}^{N} k^{(j)}\left(\left\|z^{(obj)} - z^{(j)}\right\| - y - \left\|L^{(j)}\right\|\right) = 0 \qquad (7)$$

In Vektorschreibweise ergibt sich dieses nichtlineare Gleichungssystem (7) zu

$$f\left(z^{(obj)}, y\right) = \left[f_1\left(z^{(obj)}, y\right), f_2\left(z^{(obj)}, y\right), f_3\left(z^{(obj)}, y\right), f_4\left(z^{(obj)}, y\right)\right]^T = 0 \qquad (8),$$

das mit einem geeigneten mathematischen Lösungsverfahren gelöst werden kann.

Alternativ kann die Gleichung $f_4 = 0$ umgeformt werden zu

$$y\left(z^{(obj)}\right)=\frac{1}{\sum_{i=1}^{N}k^{(i)}}\sum_{i=1}^{N}k^{(i)}\left(\left\|z^{(obj)}-z^{(i)}\right\|-\left\|L^{(i)}\right\|\right) \qquad (9)$$

Der Streckenversatz y kann damit explizit durch die drei unbekannten Objektkoordinaten und die einzelnen Meßgrößen $t_{diff}^{(j)}$ ausgedrückt werden. Das nichtlineare Gleichungssystem (7) kann hiermit auf ein Gleichungssystem (10) von drei Gleichungen mit drei Unbekannten reduziert werden, wobei für eine Bestimmung der Objektposition im dreidimensionalen Raum nach wie vor die Meßsignale $t_{diff}^{(j)}$ von mindestens vier Basisstationen 1 erforderlich sind:

$$g_1\left(z^{(obj)}\right)=\sum_{j=1}^{N}k^{(j)}\left(z_1^{(obj)}-z_1^{(j)}\right)\left(\frac{\left\|L^{(j)}\right\|+\frac{1}{\sum_{i=1}^{N}k^{(i)}}\sum_{i=1}^{N}k^{(i)}\left(\left\|z^{(obj)}-z^{(i)}\right\|-\left\|L^{(i)}\right\|\right)}{\left\|z^{(obj)}-z^{(j)}\right\|}-1\right)=0$$

$$g_2\left(z^{(obj)}\right)=\sum_{j=1}^{N}k^{(j)}\left(z_2^{(obj)}-z_2^{(j)}\right)\left(\frac{\left\|L^{(j)}\right\|+\frac{1}{\sum_{i=1}^{N}k^{(i)}}\sum_{i=1}^{N}k^{(i)}\left(\left\|z^{(obj)}-z^{(i)}\right\|-\left\|L^{(i)}\right\|\right)}{\left\|z^{(obj)}-z^{(j)}\right\|}-1\right)=0$$

$$g_3\left(z^{(obj)}\right)=\sum_{j=1}^{N}k^{(j)}\left(z_3^{(obj)}-z_3^{(j)}\right)\left(\frac{\left\|L^{(j)}\right\|+\frac{1}{\sum_{i=1}^{N}k^{(i)}}\sum_{i=1}^{N}k^{(i)}\left(\left\|z^{(obj)}-z^{(i)}\right\|-\left\|L^{(i)}\right\|\right)}{\left\|z^{(obj)}-z^{(j)}\right\|}-1\right)=0$$

(10)

In Vektorschreibweise ergibt sich dieses nichtlineare Gleichungssystem (10) zu

$$g\left(z^{(obj)}\right)=\left[g_1\left(z^{(obj)}\right),g_2\left(z^{(obj)}\right),g_3\left(z^{(obj)}\right)\right]^T=0 \qquad (11)$$

Das iterative Lösen des Gleichungssystems (11) anstelle des Gleichungssystems (7) ist unkritischer, da die Gefahr eines direkten Wegdriftens des im Gleichungssystem (7) zu bestimmenden Streckenversatzes y ausgeräumt ist.

Das Gleichungssystem (11) g = 0 kann mit einem mehrdimensionalen gedämpften Newton-Iterationsverfahren gemäß

$$^{m+1}z^{(obj)} = {}^{m}z^{(obj)} - g'\left({}^{m}z^{(obj)}\right)^{-1} g\left({}^{m}z^{(obj)}\right) \tag{12}$$

gelöst werden. Die Jacobi-Matrix g' ist dabei gegeben durch

$$g'\left(z^{(obj)}\right) = \begin{bmatrix} \frac{\partial g_1}{\partial z_1^{(obj)}}\left(z^{(obj)}\right) & \frac{\partial g_1}{\partial z_2^{(obj)}}\left(z^{(obj)}\right) & \frac{\partial g_1}{\partial z_3^{(obj)}}\left(z^{(obj)}\right) \\ \frac{\partial g_2}{\partial z_1^{(obj)}}\left(z^{(obj)}\right) & \frac{\partial g_2}{\partial z_2^{(obj)}}\left(z^{(obj)}\right) & \frac{\partial g_2}{\partial z_3^{(obj)}}\left(z^{(obj)}\right) \\ \frac{\partial g_3}{\partial z_1^{(obj)}}\left(z^{(obj)}\right) & \frac{\partial g_3}{\partial z_2^{(obj)}}\left(z^{(obj)}\right) & \frac{\partial g_3}{\partial z_3^{(obj)}}\left(z^{(obj)}\right) \end{bmatrix} \tag{13}$$

Die einzelnen Elemente dieser Matrix berechnen sich zu

$$\frac{\partial g_u}{\partial z_v^{(obj)}}\left(z^{(obj)}\right) = \begin{cases} \sum_{j=1}^{N} k^{(j)} \frac{z_u^{(obj)} - z_u^{(j)}}{\left\| z^{(obj)} - z^{(j)} \right\|} \left( \frac{\partial y}{\partial z_v^{(obj)}}\left(z^{(obj)}\right) - \frac{\left(\left\|L^{(j)}\right\| + y\right)\left(z_v^{(obj)} - z_v^{(j)}\right)}{\left\| z^{(obj)} - z^{(j)} \right\|^2} \right) & \textit{für } u \neq v \\ \sum_{j=1}^{N} k^{(j)} \left( \frac{1}{\left\| z^{(obj)} - z^{(j)} \right\|} \left( \left(z_u^{(obj)} - z_u^{(j)}\right) \frac{\partial y}{\partial z_u^{(obj)}}\left(z^{(obj)}\right) + \right. \right. \\ \left. \left. + \left(\left\|L^{(j)}\right\| + y\right) \left( 1 - \frac{\left(z_u^{(obj)} - z_u^{(j)}\right)^2}{\left\| z^{(obj)} - z^{(j)} \right\|^2} \right) \right) - 1 \right) & \textit{für } u = v \end{cases} \tag{14}$$

mit

$$\frac{\partial y}{\partial z_v^{(obj)}}\left(z^{(obj)}\right) = \frac{1}{\sum_{j=1}^{N} k^{(j)}} \sum_{j=1}^{N} k^{(j)} \frac{\left(z_v^{(obj)} - z_v^{(j)}\right)^2}{\left\| z^{(obj)} - z^{(j)} \right\|^2} \tag{15}$$

und $u, v \in \{1,2,3\}$.

Bei einem zweiten Lösungsverfahren werden Differenzen der Bestimmungsgleichungen (4) zweier Basisstationen 1 so gebildet, daß ein lineares (meist überbestimmtes) Gleichungssystem bezüglich der Objektkoordinaten und des Streckenversatzes $y$ entsteht. Die Bestimmungsgleichung (4) der $j$-ten Basisstation 1 kann hierzu wie folgt umgeschrieben werden:

$$y + \left\| L^{(j)} \right\| = \left\| z^{(obj)} - z^{(j)} \right\|$$

$$y + \left\| L^{(j)} \right\| = \sqrt{\left(z_1^{(obj)} - z_1^{(j)}\right)^2 + \left(z_2^{(obj)} - z_2^{(j)}\right)^2 + \left(z_3^{(obj)} - z_3^{(j)}\right)^2}$$

$$\left(y + \left\| L^{(j)} \right\|\right)^2 = \left(z_1^{(obj)} - z_1^{(j)}\right)^2 + \left(z_2^{(obj)} - z_2^{(j)}\right)^2 + \left(z_3^{(obj)} - z_3^{(j)}\right)^2 \qquad (16)$$

$$\begin{aligned} y^2 + 2y\left\| L^{(j)} \right\| + \left\| L^{(j)} \right\|^2 = & \left(z_1^{(obj)}\right)^2 - 2z_1^{(obj)} z_1^{(j)} + \left(z_1^{(j)}\right)^2 \\ & + \left(z_2^{(obj)}\right)^2 - 2z_2^{(obj)} z_2^{(j)} + \left(z_2^{(j)}\right)^2 \\ & + \left(z_3^{(obj)}\right)^2 - 2z_3^{(obj)} z_3^{(j)} + \left(z_3^{(j)}\right)^2 \end{aligned}$$

Für zwei Basisstationen *j, k* (mit *j* ungleich *k*) ergibt die Subtraktion dieser beiden Gleichungen (17):

$$\begin{aligned} \left(z_1^{(k)}\right)^2 - \left(z_1^{(j)}\right)^2 + \left(z_2^{(k)}\right)^2 - \left(z_2^{(j)}\right)^2 + \left(z_3^{(k)}\right)^2 - \left(z_3^{(j)}\right)^2 + \left\| L^{(j)} \right\|^2 - \left\| L^{(k)} \right\|^2 = & \; z_1^{(obj)}\, 2\left(z_1^{(k)} - z_1^{(j)}\right) \\ & + z_2^{(obj)}\, 2\left(z_2^{(k)} - z_2^{(j)}\right) \\ & + z_3^{(obj)}\, 2\left(z_3^{(k)} - z_3^{(j)}\right) \\ & + 2y\left(\left\| L^{(k)} \right\| - \left\| L^{(j)} \right\|\right) \end{aligned} \qquad (17)$$

Diese neue Gleichung (17) ist jetzt linear in den drei Objektpositionen $z^{(obj)}$ und dem Streckenversatz *y*. Das lineare Gleichungssystems, das durch das Differenzbilden der Gleichungen (4) für *N* Basisstationen *N*-1 linear unabhängige Gleichungen (17) enthält, kann mit geeigneten mathematischen Lösungsverfahren (Methode der gewichteten kleinsten Quadrate für ein überbestimmtes lineares Gleichungssystem mit einer Gewichtung der Meßergebnisse der einzelnen Basisstationen 1, etc.) gelöst werden. Die hierfür zugeordneten Fehler sind nicht mit jenen identisch, die die Grundlage des Gütefunktionals *J* bilden. Es werden dabei diejenigen Differenzen gebildet, die eine möglichst hohe Genauigkeit bei der Positionsbestimmung erzielen. Hierzu können verschiedene Sätze an Differenzen gebildet werden. Für jeden Satz werden die Konsistenzen der einzelnen Differenzen im Hinblick auf das Ergebnis ermittelt, und es wird derjenige Satz ausgewählt mit den besten Konsistenzen all seiner Differenzen.

Neben dem reinen linearen Gleichungssystem mit den Gleichungen (17) kann für ein alternatives mathematisches Lösungsverfahren noch die Bedingung aufgestellt werden, daß die Summe der gewichteten Meßfehler der einzelnen Basisstationen 1 Null ergibt. Diese Meßfehler sind hierbei mit jenen identisch, die die Grundlage des Gütefunktionals *J* bilden. Für *N* Basisstationen stehen dann *N*-1 lineare Gleichungen sowie eine nichtlineare Gleichung zur Verfügung. Die Objektkoordinaten können beim linearen Gleichungssystem direkt in Abhängigkeit des unbekannten Streckenversatz *y* ausgedrückt werden. Im überbestimmten Fall wird die inverse Koeffizientenmatrix durch die pseudoinverse Koeffizientenmatrix ersetzt. Die Objektkoordinaten der zusätzlichen nichtlinearen Gleichung können daher durch Funktionen bezüglich des Streckenversatz *y* ersetzt werden. Es resultiert somit eine nichtlineare Gleichung in einer Unbekannten, welche z.B. mittels eines Newton Verfahrens gelöst werden kann.

Alternativ kann mit dem linearen Gleichungssystem (17), ggf. unter Einbeziehung der nichtlinearen Gleichung für den Strekkenversatz y erst eine Lösung ermittelt werden, die dann als Startwert für die Lösung mit dem nichtlinearen Gleichungssystem (4) oder (11) herangezogen wird. Das nichtlineare Gleichungssystem (4) oder (11) führt nämlich oftmals zu einer genaueren Lösung, die Bestimmung der Lösung kann jedoch bei einem ungeeignetem Startwert für die Iteration zu Problemen in der Konvergenz führen. Mit einem guten Startwert kann auch die Lösungsdauer deutlich verkürzt werden.

Da die Basisstationen 1 häufig annähernd in einer Ebene angeordnet sind, weist die z-Koordinate (Vertikale) eine hohe Empfindlichkeit gegenüber etwaigen Meßfehlern der einzelnen Basisstationen 1 auf, wobei die z-Koordinate des Objekts 2 einen nicht vernachlässigbaren Einfluß auf die Lage des globalen Minimums des Gütefunktionales in der x/y-Ebene hat. Bei den oben beschriebenen Lösungsverfahren kann daher die z-Achse auf einen bestimmten Wert fixiert und die Positionsbestimmung nur in der x/y-Ebene durchgeführt werden. Als hierfür geeigneten Wert kann die gefilterte und somit geglättete z-Koordinate der Verfolgereinheit (siehe unten) herangezogen werden. Die Bestimmung der z-Koordinate findet dann in einem zweiten Schritt statt. Durch diese Vorgehensweise wird ein Wegdriften der Position entlang der z-Achse verhindert.

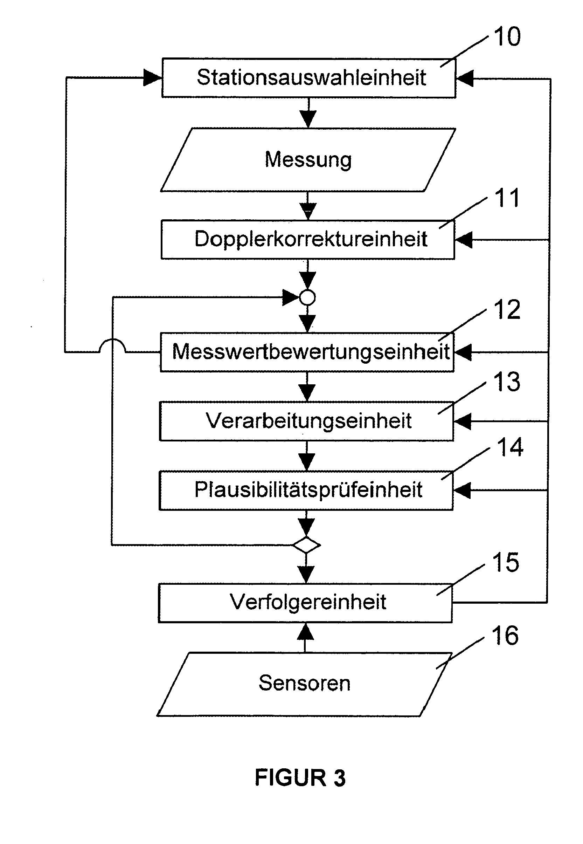

Die zuvor beschriebenen Lösungsverfahren werden in der Auswerteeinheit 7 ausgeführt. Wie im Blockschaltbild der Figur 3. gezeigt ist, umfaßt die Auswerteeinheit 7 eine Stationsauswahleinheit 10, eine Dopplerkorrektureinheit 11, eine Meßwertbewertungseinheit 12, eine Verarbeitungseinheit 13, eine Plausibilitätsprüfeinheit 14 sowie eine Verfolgereinheit 15. Die Stationsauswahleinheit 10 erhält von der Meßwertbewertungseinheit 12 berechnete Güteinformationen über die Meßergebnisse der einzelnen Basisstationen 1. Ebenso liefert die Verfolgereinheit 15 ihre geschätzten Positionswerte an alle vorgeschalteten Einheiten 10 bis 14. Nachfolgend werden die einzelnen Einheiten 10 bis 16 der Auswerteeinheit 7 näher beschrieben, die vorzugsweise als Software in einem Computersystem ausgeführt sind.

Die Stationsauswahleinheit 10 trifft eine Auswahl der Basisstationen 1, deren Meßergebnisse zur Positionsbestimmung angefordert werden. Dadurch kann vorab die Menge der an die Auswerteeinheit 7 zu übertragenden Daten verringert werden, die begrenzt sein kann, wenn pro Meßzyklus nur Ergebnisse einer maximalen Anzahl (kleiner als N) an Basisstationen 1 abgefragt werden können. Es sollen dabei nur die Meßergebnisse angefordert werden, die für das Lösungsverfahren in der Verarbeitungseinheit 13 eine möglichst hohe Schärfe aufweisen. Ein geeignetes Maß zur Charakterisierung der Schärfe ist die "Dilution of Precision" (DOP), welche sich im Bereich der GPS-Positionsbestimmung (GPS = "Global Positioning System") bei der Beurteilung der Satellitenanordnungen durchgesetzt hat. Die "Dilution of Precision" beschreibt abhängig von der Satellitenanordnung die Auswirkungen von Meßfehlern auf die zu bestimmende Objektposition. verwiesen, dessen Inhalt hiermit durch Bezugnahme in die vorliegende Beschreibung mitaufgenommen ist. Für weitere Details hierzu wird auf M. S. Grewal, L. R. Weill und A. P. Andrews "Global Positioning Systems, Inertial Navigation, and Integration" New York, John Wiley & Sons, 2001 verwiesen, dessen Inhalt hiermit durch Bezugnahme in die vorliegende Beschreibung mitaufgenommen ist.

Die Auswahl der Basisstationen 1 basiert insbesondere auf der jeweiligen Distanz zur geschätzten Position des Objekts 2 sowie der Ausrichtung und der Richtcharakteristik der Antennen, um einen ausreichend hohen Signal-Rausch-Abstand für das Meßergebnis der ausgewählten Basisstation 1 zu erzielen. Dabei reduziert die Stationsauswahleinheit 10 die Anzahl der angeforderten Meßergebnisse durch gezielte Auswahl der Basisstationen 1 schon frühzeitig auf ein Minimum, da der Meßwertbewertungseinheit 12 ein etwaiges späteres Verwerfen von angeforderten, jedoch unscharfen oder falschen Meßergebnissen aus mathematischen Gründen Probleme bereitet. Beispielsweise zieht die Stationsauswahleinheit 10 die Information über in vorherigen Messungen verworfene Basisstationen 1 bereits als frühes Auswahlkriterium für den aktuellen Auswahlprozeß der Basisstationen 1 heran.

Die Stationsauswahleinheit 10 wählt die Basisstationen 1 und die Haupt-Basisstation 3 sowohl nach passiven als auch aktiven Kriterien aus. Die passiven Kriterien umfassen die aktuelle Geometrie, d.h. die Anordnung der Basisstationen 1 relativ zum Objekt 2, die Richtcharakteristik der stationsinternen Antennen, die Abschattung dieser Antennen durch lokale Gegebenheiten, die Freiraumdämpfung aufgrund der Distanz zwischen Objekt 2 und jeweiliger Basisstation 1, sowie eine Optimierung der "Dilution of Precision" (DOP) basierend auf der aktuell geschätzten Position des Objekts 2. Die Stationsauswahleinheit 10 nimmt Basisstationen 1 mit zu geringem Signal-Rausch-Abstand von vornherein von der Auswahl aus. Stehen nach diesem Vorauswahlprozeß noch mehr Basisstationen 1 zur Disposition als in einem Meßzyklusmaximal angefordert werden können, so erfolgt die weitere Auswahl dahingehend, daß die "Dilution of Precision" optimiert wird. Zur Beurteilung der Richtcharakteristik sowie der Freiraumdämpfung wird die von der Verfolgereinheit 15 geschätzte Position des Objektes 2 verwendet.

Bei den aktiven Kriterien wird basierend auf vorhergehenden Messungen und Auswertungen die Wahrscheinlichkeit beurteilt, ob eine Basisstation 1 aktuell ein korrektes Ergebnis liefern kann, das bei der Berechnung berücksichtigt werden sollte.

Die Dopplerkorrektureinheit 11 kompensiert die Einflüsse der Frequenzverschiebung der vom sich bewegenden Objekt 2 emittierten Frequenz um die Dopplerfrequenz. Die Dopplerfrequenz ist proportional zur Sendefrequenz und ändert damit beispielsweise die Steilheit der Frequenzrampe. Abhängig von Richtung und Betrag der Geschwindigkeit des Objekts 2 verschieben sich daher die in den einzelnen Basisstationen 1 zum Empfangszeitpunkt gemessenen Frequenzen. Dies beeinflußt direkt die gemessene Laufzeitdifferenz und verschiebt damit die berechnete Position des Objekts 2. Der Dopplereffekt beeinflußt jedoch nur unbedeutend die Konsistenz der Meßergebnisse der einzelnen Basisstationen 1.

Zur Kompensation des Dopplereffektes schätzt die Verfolgereinheit 15 die aktuelle Objektgeschwindigkeit sowie dessen Position und übergibt dies an die Dopplerkorrektureinheit 11. Diese korrigiert die Meßdaten der einzelnen Basisstationen 1 basierend auf einerseits der geschätzten Objektposition sowie der aus den relativen Positionsänderungen des Objektes 2 geschätzten Objektgeschwindigkeit und andererseits der Steigung der Frequenzrampe. Der Dopplereffekt beeinflußt nur unmerklich die relativen Positionsänderungen von mehreren aufeinanderfolgenden Messungen. Er beeinflußt damit nur unmerklich den Betrag oder die Richtung der von der Verfolgereinheit 15 aus der relativen Positionsänderung geschätzten Geschwindigkeit. Zusätzliche Sensoren (Geschwindigkeits- und Beschleunigungssensoren, usw.) im Objekt 2 können das Schätzen der momentanen Objektgeschwindigkeit aus Positionsmessungen durch die Verfolgereinheit 15 verbessern oder sogar ganz ersetzen.

Die Meßwertbewertungseinheit 12 streicht einzelne Meßergebnisse von denjenigen Basisstationen 1, die ein vermeintlich falsches Ergebnis liefern, oder ändert deren Gewichtung, indem sie den entsprechenden Gewichtungswert $k^{(j)}$ verändert. Sie streicht ein Meßergebnis beispielsweise dadurch, daß sie den entsprechenden Gewichtungswert $k^{(j)}$ auf Null setzt. Wird das Meßergebnis einer Basisstation 1 in Abhängigkeit einer harten Schranke direkt gestrichen, so kann es zu Sprüngen in der Objektposition kommen, wenn das Meßergebnis einer Basisstation 1 bei einer Messung berücksichtigt und bei der darauffolgenden Messungen verworfen wird, oder umgekehrt. Daher werden die Gewichtungswerte $k^{(j)}$ bevorzugt in Form einer "weichen" Funktion des zugeordneten Konsistenzfehlers geändert. Die Meßwertbewertungseinheit 12 kann die Gewichtungswerte $k^{(j)}$ der einzelnen Basisstationen 1 wie folgt einstellen.

Gemäß einer ersten Variante ordnet die Plausibilitätsprüfungseinheit 14 den Meßergebnissender einzelnen Basisstationen 1 einen Konsistenzfehler zu, nachdem die Verarbeitungseinheit 13 die Position des globalen Minimums des Gütefunktionals $J$ bestimmt hat. Überschreitet der Konsistenzfehler eine vorgegebene Schranke, wird das Meßergebnis dieser Basisstation 1 verworfen oder dessen Gewichtung reduziert. Für den reduzierten bzw. neugewichteten Meßdatensatz wird dann die Position des globalen Minimums erneut bestimmt. Dieser Prozeß des Streichens bzw. Neugewichtens einzelner Meßergebnisse kann dabei mehrmals wiederholt werden, z.B. abhängig davon, wie viele Meßergebnisse höchstens eliminiert werden sollen. Bei dieser Art des Streichens bzw. Neugewichten wird immer nur der Gewichtungswert $k^{(j)}$ einer Basisstation 1 gleichzeitig gestrichen, da sich die Konsistenzfehler der Meßergebnisse der einzelnen Basisstationen 1 gegenseitig beeinflussen. Diese erste Variante benötigt aber keine Zusatzinformation von der Verfolgereinheit 15 und kann somit auch in deren Initialisierungsphase angewendet werden.

Gemäß einer zweiten Variante wird den Meßergebnissender einzelnen Basisstationen 1 jeweils ein Streckenversatz y basierend auf der von der Verfolgereinheit 15 berechneten erwarteten Position des Objekts 2 zugewiesen. Die Basisstationen 1 werden so ausgewählt, daß eine maximale Anzahl an Basisstationen mit konsistenten Streckenversätzen $y$ für die Auswertung herangezogen wird. Bei dieser Variante können gleichzeitig die Meßergebnisse mehrerer Basisstationen 1 gestrichen bzw. deren Gewichtungswerte verändert werden, allerdings ist die Kenntnis der ungefähren Objektposition notwendig. Diese Information wird von der Verfolgereinheit 15 bereitgestellt.

Bei der Lösung des linearen Gleichungssystem (17), ggf. mit nichtlinearer Gleichung für den Streckenversatz $y$, können wegen des geringen Rechenaufwands verschiedene Kombinationen der Meßergebnisse der Basisstationen 1 durchgerechnet werden, um somit deren Einflüsse auf die Objektposition direkt zu ermitteln. Hierzu überprüft die Plausibilitätsprüfungseinheit 14 das Positionsergebnis der Verarbeitungseinheit 13 basierend auf der von der Verfolgereinheit 15 geschätzten aktuellen Position auf Plausibilität, und ordnet dem Positionsergebnis einen Konsistenzfehler zu. Dann versucht die Plausibilitätsprüfungseinheit 14, in Verbindung mit der Meßwertbewertungseinheit 12 und der Verarbeitungseinheit 13, durch gezieltes Streichen von einzelnen Basisstationen 1 herauszufinden, ob das Meßergebnis dieser Basisstationen 1 die berechnete Position des Objekts über ein bestimmten Wert hinaus verändert. Sie überprüft ferner den zugehörigen Streckenversatz y, ob sich dieser außerhalb eines gewissen Gültigkeitsbereiches befindet. Wird wenigstens eine der beiden Bedingungen erfüllt, so verwirft sie entweder das Positionsergebnis, ändert die in die Berechnung einfließenden Basisstationen 1 und/oder gewichtet deren Meßergebnisse neu.

Die Verfolgereinheit 15 macht mit Kenntnis des Objektverhaltens in der Vergangenheit eine Vorhersage für die wahrscheinlich zukünftige Position (die Objektposition sind bei zwei unmittelbar aufeinander folgenden Messungen voneinander abhängig, nicht jedoch der Streckenversatz $y$). Sie glättet hierzu, basierend auf den vorherigen Positionsergebnissen der Verarbeitungseinheit 13 und der Plausibilitätsprüfungseinheit 14 sowie der Information etwaiger zusätzlicher am Objekt 2 angebrachter Sensoren, den Positionsverlauf des Objekts 2 in der Vergangenheit und schätzt daraus dessen aktuelle Position, Geschwindigkeit und Beschleunigung. Sie verwendet dann das aktuelle Positionsergebnis der Verarbeitungseinheit 13 sowie etwaige andere Meßgrößen von Sensoren, um die geschätzte Position des Objekts 2 sowie dessen Geschwindigkeits- und Beschleunigungsverhalten zu korrigieren.

Die weiteren Meßgrößen erhält sie z.B. von einem Sensor 16, der am Objekt angeordnet ist und mit dem Objekttransponder in Verbindung steht. Geeignete Sensoren 16 sind z.B. Drehraten-, Drehbeschleunigungs-, Geschwindigkeits-, Beschleunigungs- und Neigungssensoren. Das Objekt 2 sendet die Meßgrößen des Sensors 16 im wesentlichen zeitgleich mit dem Objektsignal an mindestens eine der Basisstationen 1. Die zusätzlichen Meßgrößen führen zu einer Genauigkeitserhöhung der Verfolgereinheit 15 und einer verbesserten Abschätzung der Konsistenzfehler. Auch bei wenigen verfügbaren Basisstationen 1 kann durch die redundante Information des Sensors 16 somit eine Aussage über die Güte der aktuellen Auswertung gemacht werden. Die Zustandsaktualisierung in der Verfolgereinheit 15 kann sogar nur mit der Information des Sensors 16 erfolgen.

Zur Lagebestimmung des Objektes 2 kann mehr als nur ein Objekttransponder am Objekt 2 angebracht sein. Ist ein Objekt 2 beispielsweise mit zwei Objekttranspondern ausgestattet, kann die Lage des Objektes 2 in einer zweidimensionalen Fläche, bei drei Objekttranspondern im Raum bestimmt werden. Bei der oben beschriebenen Positionsbestimmung ist zu jedem Abfragezeitpunkt immer nur ein Objekttransponder aktiviert. Zur Bestimmung der räumlichen Lage des Objekts 2 werden aber die Positionen von verschiedenen Objekttranspondern zum gleichen Zeitpunkt benötigt. Die Auswerteinheit 7 bildet die einzelnen Positionen der Objekttransponder daher auf ein gemeinsames zeitliches Raster ab. Hierdurch kann sie die Position des aktiven Objekttransponders direkt mit den bereits bestimmten Positionen der anderen Objekttransponder in Beziehung setzen. Sie kann auch die zuvor bestimmten Positionen der inaktiven Objekttransponder, die fest an einem starren Objekt 2 montiert sind und deren Relativpositionen zueinander bekannt sind, über diese bekannten Relativpositionen zum aktiven Objekttransponder korrigieren. Für die Lagedetektion stehen ihr somit die Positionen von mehreren Objekttranspondern zum gleichen Zeitpunkt zur Verfügung. Sie kann mit dieser Lagedetektion eines Objekts 2 Schleuder- und Driftvorgänge von Autos charakterisieren oder die räumliche Lage von automatisiert arbeitenden Fahrzeugen bestimmen (z.B. die genaue Lage des Sportlers beim Eiskunstlauf, die Lage eines Kanus bei einer Wildwasserfahrt, usw.).

Da das obige Positionsbestimmungssystem die Distanz zwischen der Antenne einer Basisstation 1 und der Antenne des Objekttransponders unter Berücksichtigung der Position des Referenztransponders und des konstanten Streckenversatzes *y* mißt, fallen etwaige Verbindungslängen von der Antenne zur HF-Elektronik heraus und müssen für die Auswertung nicht bekannt sein. Mittels eines Schalter kann ein Transponder sequentiell mehrere Antennen ansprechen, für ein derartiges Mehrkanalsystem wird nur eine HF-Hardware benötigt.

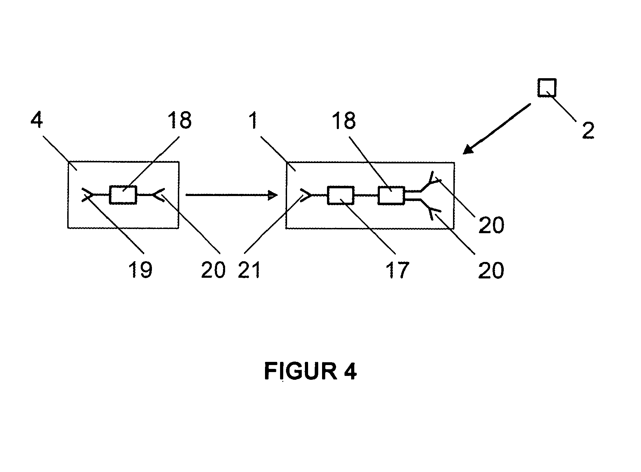

Figur 4 zeigt ein spezielles Beispiel eines Empfängers in einer Basisstation 1, der zwei Antennen 20 mit einer Richtcharakteristik und eine Antenne 21 zum Aufbau einer Richtstrecke zum Referenztransponder 4 umfaßt, sowie eines Senders im Referenzobjekt 4, der eine Antenne 20 mit einer Richtcharakteristik und eine Antenne 19 mit einer Rundstrahlcharaktristik umfaßt. Der Sender kann die Antennen 19 und 20, der Empfänger eine der beiden Antennen 20 mittels eines Schalters 18 selektiv ansprechen. Für ein derartiges Mehrantennensystem wird nur eine HF-Hardware benötigt. Die Antennensignale von einer der beiden Antennen 20 in der Basisstation 1 werden in einem Leistungsmischer 17 mit dem Signal der Antenne 21 zusammengeführt. In der Basisstation 1 ist die Antenne 21 auf das Referenzobjekt 4 ausgerichtet, die zusätzlich auch das Signal vom Objekt 2 empfangen kann. Die Richtcharakteristik und Ausrichtung der Antenne 21 ist so gewählt, daß eine Richtstrecke zum Referenzobjekt 4 gebildet wird, wodurch die Entfernung zum Referenzobjekt 4 durch den erhöhten Antennengewinn erheblich gesteigert werden kann. Dabei muß jedoch darauf geachtet werden, daß die Antennen 20 und 21 nicht das Signal von der gleichen Signalquelle empfangen, da ansonsten die Gefahr einer Signalinterferenz besteht. Bei der Ausrichtung mehrerer Antennen 20 mit Richtstrahlcharakteristik muß auf etwaige Nebenkeulen der Antennen 20 und 21 geachtet werden. Der Schalter 18 im Sender bzw. Empfänger kann die einzelnen Antennen 19, 20 bzw. 21 nach folgenden Kriterien auswählen. Die Antenne 19 mit Rundstrahlcharakteristik im Sender kann ausgewählt werden, wenn die Basisstationen 1, die zur Messung herangezogen werden, um das Referenzobjekt 4 herum angeordnet sind. Befinden sich die Basisstationen 1 hingegen in einem Bereich, in dem die Antenne 19 wegen der Entfernung der einzelnen Basisstationen 1 zum Referenzobjekt 4 keine genügend hohe Signalleistung gewährleistet, so wird die Antenne 20 mit Richtstrahlcharakteristik ausgewählt. Das somit erweiterte Meßfeld wird dann zwar unter Umständen nicht mehr von den Basisstationen 1 umschlossen, seine Ausdehnung nimmt aber deutlich zu. Selbstverständlich können mehrere Antennen 20 mit unterschiedlicher Richtstrahlcharakteristik und Ausrichtung vorgesehen und entsprechend ausgewählt werden. Ebenso können mehrere solcher Antennen, ein etwaiger zugehöriger Leistungsmischer und/oder Schalter für den Objekttransponder am Objekt 2 vorgesehen werden.

Das zuvor beschriebene Positionsbestimmungssystem eignet sich für vielfältige Anwendungen, insbesondere im Sportbereich zur Leistungsbewertung von Sportlern und dergleichen. Beispielsweise kann die obige Positionsbestimmung, optional durch Sensoren über einen Rückkanal unterstützt, den Frühstart eines Teilnehmers in Rennen jeglicher Art erkennen. In einem Online-Erkennung-Betrieb überwacht das Positionsbestimmungssystem ständig die Position der Teilnehmer des Rennens. Mit zusätzlicher Hilfe von Beschleunigungssensoren kann es einen Frühstart detektieren, bevor der entsprechende Teilnehmer eine signifikante Wegstrecke zurückgelegt hat. Erkennt es einen Frühstart, so bricht es den Start sofort ab. Im Offline-Erkennung-Betrieb stellt es nachträglich fest, ob ein Teilnehmer zu früh gestartet ist. Hierbei rechnet es den Teilnehmer nach erfolgtem Start auf seinen jeweiligen genauen Startzeitpunkt zurück. Liegt der Startzeitpunkt eines Teilnehmers vor dem Startzeitpunkt des Rennens, teilt es dies der Rennleitung mit.

Das Positionsbestimmungssystem hat bei der Frühstarterkennung den Vorteil, daß es keine Induktionsschleifen, Lichtschranken oder ähnliche Installationen an der Rennstrecke benötigt. Solche Installationen können bei vielen Medien (Wasser bei Boot- und Schiffsrennen, Luft bei Flugzeug und Hubschrauberrennen sowohl im Modellbau als auch bei von Piloten gesteuerten Maschinen, etc.) nicht oder nur unter erschwerten Bedingungen angebracht werden. Das Positionsbestimmungssystem kann bei einer Startkontrolle die Lage und Form der Startlinie (bzw. Start-Ebene für sich räumlich bewegende Objekte) frei wählen. Die Form ist insbesondere nicht auf eine gerade Linie bzw. flache Ebene beschränkt. Es rechnet auf den Zeitpunkt der Überschreitung der Start-Linie basierend auf dem geschätzten Geschwindigkeits- und Beschleunigungsverlauf zurück. Analog berechnet es den Zeitpunkt der Überquerung der Ziel-Linie bzw. Ziel-Ebene. Aus der Differenz dieser beiden Zeitpunkte berechnet es die Zeitdauer, die das Objekt 2 zum Zurücklegen der entsprechenden Strecke benötigt hat. Zur Messung der Rundenzeiten muß es nur die Start/Ziel-Linie bzw. Start/Ziel-Ebene erfassen. Die restliche Rennstrecke muß nicht in der Reichweite der Basisstationen 1 liegen.

Das Positionsbestimmungssystem kann die Zeit- und Geschwindigkeitsdifferenz zweier Rennteilnehmer für beliebig gewählte Positionen bestimmen, um sie unmittelbar und annähernd kontinuierlich miteinander oder mit dem das Feld anführenden Teilnehmer zu vergleichen. Zur Berechnung des annähernd kontinuierlichen Zeit- bzw. Geschwindigkeitsverlaufs werden beliebig viele virtuelle Sektoren eingeführt. Diese virtuellen Sektorengrenzen können eine nahezu beliebige Form aufweisen (z.B. kann die Fahrlinie des Rennteilnehmers bezogen auf die Ideallinie nachgeformt werden). Überquert ein Teilnehmer eine dieser virtuellen Sektorengrenzen, so rechnet das Positionsbestimmungssystem basierend auf seinem aktuellen Zustand (Geschwindigkeit, Beschleunigung,...) auf den Zeitpunkt zurück, zu dem er die Sektorengrenze passiert hat und welche Geschwindigkeit er dabei hatte.

Beim Vergleich zweier Teilnehmer nimmt das Positionsbestimmungssystem an, daß die Geschwindigkeitsdifferenz der beiden Teilnehmer bis zum nächsten virtuellen Sektor gültig bleibt. Dies trifft jedoch nicht für die Zeitdifferenz vom Vergleichs- zum Referenzteilnehmer zu, da der Vergleichsteilnehmer den nächsten Sektor möglicherweise gar nicht mehr erreicht. In diesem Fall wird die Geschwindigkeit des Vergleichsteilnehmers an der letzten von ihm überquerten Sektorgrenze annähernd Null sein. Die Differenzgeschwindigkeit an diesem Ort bezogen auf den Referenzteilnehmer entspräche dann direkt der Geschwindigkeit des Referenzteilnehmers. Daher erhöht das Positionsbestimmungssystem kontinuierlich die bisherige Zeitdifferenz der beiden Teilnehmer, wenn von einem Teilnehmer die nächste Sektorgrenze nicht in der Zeit passiert wird, die der Referenzteilnehmer von der aktuellen zur nächsten Sektorgrenze benötigt hat.

Das Positionsbestimmungssystem kann Fahrlinien bei Sportapplikationen als auch für Fahrzeuge aller Art, insbesondere von autonom agierenden Fahrzeugen zur Überwachung und/oder zur Steuerung ermitteln. Es kann die Fahrlinien zweier Teilnehmer sowie die Fahrlinie eines Teilnehmers mit der Ideallinie vergleichen zur Optimierung der Bewegungsabläufe. So kann es beim Skispringen direkt die räumliche Flugbahn des Springers zum Verbessern des Springverhaltens ermitteln. Beim Eishockey kann beispielsweise neben den Spielern auch der Puck mit einem Objekttransponder ausgestattet werden, zur Beurteilung, ob der Puck im Tor war oder nicht.

Das Positionsbestimmungssystem stellt seine Information für die Analyse von Fahrlinien bzw. Bewegungsabläufen dadurch anschaulich dar, daß es einen das Objekt 2 charakterisierenden Parameter über dessen Position aufträgt. Es stellt damit also nicht nur allein die Fahrlinie dar, sondern beispielsweise auch dessen Geschwindigkeit an jeder Position der Fahrlinie. Dabei kann es die Zeitdauer zwischen zwei zeitlich aufeinanderfolgenden Positionen konstant wählen, um zusätzlich die zeitliche Information (z.B. Zeitverlauf des Parameters) darzustellen.

Für die Bewegungsmodellierung kann das Positionsbestimmungssystem bestimmte Annahmen über das Bewegungsverhalten des zu vermessenden Objekts 2 machen. Diese Annahmen können z.B. eine konstante Position oder ein konstanter Geschwindigkeits- bzw. Beschleunigungsverlauf, aber auch das Durchfahren einer Links- oder Rechtskurve sein. So kann es den Übergang vom Stillstand zur Beschleunigungsphase eines Objekts 2 z.B. als Startkontrolle im Rennsport verwenden. Um möglichst in Echtzeit eine Änderung der Bewegungsweise zu erkennen, kann das Positionsbestimmungssystem mehrere Verfolgereinheiten 15 umfassen. Dies soll am Beispiel eines Fahrzeugs im Stillstand, dem eine Beschleunigungsphase folgt, erläutert werden. Ziel ist es, diese Beschleunigungsphase möglichst frühzeitig zu erkennen. In jedem Abtastschritt initialisiert die Verfolgereinheit 15 einen Verfolgerfilter für ein Objekt mit z.B. konstanter Beschleunigung. Sobald mit einer bestimmten Wahrscheinlichkeit das Ergebnis einer der Verfolgerfilter ausgeschlossen werden kann, wird das entsprechende Ergebnis verworfen. Um ein Ansteigen der Anzahl der parallelen Verfolgerfilter zu verhindern, muß ab einem gewissen Zeitpunkt eine Entscheidung über das Fortführen jedes der Verfolgerfilter erzwungen werden. Die Wahrscheinlichkeiten der Ergebnisse der Verfolgerfilter werden bewertet und das Ergebnis mit der höchsten Wahrscheinlichkeit als aktueller Zustand angenommen. Für weitere Details eines solchen Tracking-Verfahrens wird auf Y. Bar-Shalom, X. R. Li und T. Kirubaranjan "Estimation with Applications to Tracking and Navigation," New York: John Wiley & Sons, 2001 verwiesen, dessen Inhalt hiermit durch Bezugnahme in die vorliegende Beschreibung mitaufgenommen ist.

Das Positionsbestimmungssystem kann den Wendekreis von Fahrzeugen bestimmen, der mit herkömmlichen Methoden aufgrund nichtidealer Fahreigenschaften der Fahrzeuge nur schwer zu bestimmen ist. Fährt ein Fahrzeug eine volle Kreisrunde aus, so stimmen nämlich Anfang und Ende der Fahrlinie meist nicht exakt überein. Das Positionsbestimmungssystems kann die Driftbewegung des Fahrzeuges jedoch exakt erfassen und daraus genauere Ergebnisse für den Wendekreis ableiten.

## Patentansprüche

**1.** Verfahren zum Bestimmen der Position eines Objektes (2) mittels einer Anzahl von Basisstationen (1) mit bekannten Positionen und mittels eines Referenzobjekts (4) mit bekannter Position, bei dem:

- ein Referenzsignal vom Referenzobjekt (4) an die Basisstationen (1) gesendet wird;
- durch den Empfang des Referenzsignals ausgelöst ein Aktivierungssignal von einer Haupt-Basisstation (3), die von der Anzahl der Basisstationen (1) umfaßt ist, an das Objekt (2) gesendet wird;
- durch den Empfang des Aktivierungssignals ausgelöst ein Objektsignal vom Objekt (2) an die Basisstationen (1) gesendet wird;
- in jeder Basisstation (1) die Zeitdifferenz zwischen den beiden Empfangszeitpunkten des Referenzsignals und des Objektsignals gemessen wird;

**dadurch gekennzeichnet, daß**

- die Position des Objektes (2) aus den bekannten Positionen der Basisstationen (1) und des Referenzobjektes (4) sowie aus den gemessenen Zeitdifferenzen unter Berücksichtigung eines Zeitversatzes bestimmt wird, der im wesentlichen der unbekannten Zeitdauer zwischen dem Empfangszeitpunkt des Referenzsignals und dem Sendezeitpunkt des Aktivierungssignals in der Haupt-Basisstation (1) und der unbekannten Zeitdauer zwischen dem Empfangszeitpunkt des Aktivierungssignals und dem Sendezeitpunkt des Objektsignals im Objekt (2) entspricht.

**2.** Verfahren nach Anspruch 1, bei dem für die Positionsbestimmung:

- Bestimmungsgleichungen für die Basisstationen (1) definiert werden, von denen jede die gemessene Zeitdifferenz, den Zeitversatz und einen für die jeweilige Basisstation (1) individuellen Meßfehler enthält; und
- das globale Minimum eines Gütefunktional auf der Basis der individuellen Meßfehler der Basisstationen (1) iterativ bestimmt wird.

**3.** Verfahren nach Anspruch 1, bei dem für die Positionsbestimmung:

- Bestimmungsgleichungen für die Basisstationen (1) definiert werden, von denen jede die gemessene Zeitdifferenz, den Zeitversatz und einen für die jeweilige Basisstation (1) individuellen Meßfehler enthält;
- eine Bestimmungsgleichung für den Zeitversatz definiert wird, die die Koordinaten der Basisstationen (1), die Koordinaten des Referenzobjektes (4) und die gemessenen Zeitdifferenzen enthält; und
- das globale Minimum eines Gütefunktional auf der Basis der individuellen Meßfehler der Basisstationen (1) und des Zeitversatzes iterativ bestimmt wird.

**4.** Verfahren nach Anspruch 2 oder 3, bei dem für die Bestimmung des globalen Minimums des Gütefunktionals ein mehrdimensionales gedämpftes Newton-Verfahren angewandt wird

**5.** Verfahren nach einem der Ansprüche 2 bis 4, bei dem die Güte der bestimmten Position des Objektes (2) aus dem minimalen Wert des Gütefunktionals und der Anordnung der Basisstationen (1) relativ zum Objekt (2) ermittelt wird.

**6.** Verfahren nach einem der Ansprüche 2 bis 5, bei dem bei der iterativen Bestimmung des globalen Minimums des Gütefunktionals die individuellen Meßfehler der Basisstationen (1) mit Gewichtungswerten gewichtet werden.

**7.** Verfahren nach Anspruch 6, bei dem die Gewichtungswerte eingestellt werden, indem das globale Minimum des Gütefunktionals ermittelt wird, jeder Basisstation (1) aus dem Ergebnis ein Konsistenzfehler zugeordnet wird, und die Gewichtungswerte abhängig vom Konsistenzfehler der Basisstationen (1) eingestellt werden.

**8.** Verfahren nach Anspruch 7, bei dem die Gewichtungswerte iterativ eingestellt werden, wobei in jedem Iterationsschritt lediglich einer der Gewichtungswerte verändert wird und anschließend das globale Minimum des Gütefunktionals erneut bestimmt wird.

**9.** Verfahren nach einem der vorhergehenden Ansprüche, bei dem für die Positionsbestimmung:

- jeweils eine Bestimmungsgleichung für jede Basisstation (1) definiert wird, die die gemessene Zeitdifferenz und die Offset-Zeitdauer enthält; und
- ein lineares Gleichungssystems gelöst wird, das lineare Gleichungen umfaßt, die als Differenz von jeweils zwei Bestimmungsgleichungen gebildet werden.

**10.** Verfahren nach Anspruch 9, bei dem die durch Lösung des linearen Gleichungssystems bestimmte Objektposition als Startwert für die iterative Suche nach dem globalen Minimum des Gütefunktionals verwendet wird.

**11.** Verfahren nach einem der vorhergehenden Ansprüche, bei dem zur Positionsbestimmung nur Zeitdifferenzen derjenigen Basisstationen (1) ausgewählt werden, die ein Objektsignal mit einer ausreichend hohen Güte empfangen haben.

**12.** Verfahren nach Anspruch 11, bei dem die Güte des empfangenen Objektsignals bewertet wird anhand der Spektraldaten der einzelnen Messungen, der Richtcharakteristik und Ausrichtung der stationsinternen Antennen (20), der Abschattung dieser Antennen (20) durch lokale Gegebenheiten, der Freiraumdämpfung aufgrund der Distanz zwischen Objekt (2) und jeweiliger Basisstation (1).

**13.** Verfahren nach einem der vorhergehenden Ansprüche, bei dem das Referenzsignal und das Objektsignal als eine Frequenzrampe ausgebildet sind, und die Zeitdifferenz mit Hilfe eines Frequenzschätzverfahrens auf der Basis des Mischsignals aus Referenz- und Objektsignal im Basisband ermittelt wird.

**14.** Verfahren nach einem der vorhergehenden Ansprüche, bei dem das Referenzsignal vom Referenzobjekt (4) sowie die Objektsignale von mehreren Objekten (2) kodiert werden, und die in den Basisstationen (1) empfangenen Objektsignale und das Referenzsignal durch Korrelation den einzelnen Objekten (2) und dem Referenzobjekt (4) zugeordnet werden.

**15.** Verfahren nach einem der vorhergehenden Ansprüche, bei dem:

- die Geschwindigkeit und die Position des Objektes (2) geschätzt wird;
- für jede Basisstation (1) der Wert des Dopplereffektes abhängig von der geschätzten Geschwindigkeit und der geschätzten Position des Objektes (2) ermittelt wird; und
- der Wert des Dopplereffektes bei der Bestimmung der Position des Objektes (2) berücksichtigt wird

**16.** Verfahren nach einem der vorhergehenden Ansprüche, bei dem eine Sensorinformation im Objekt (2) erfaßt wird, die im wesentlichen zeitgleich oder in zeitlicher Nähe mit dem Objektsignal gesendet wird.

**17.** Verfahren nach Anspruch 16, bei dem die Sensorinformation eine Information über die Drehrate, Drehbeschleunigung, Geschwindigkeit, Beschleunigung und/oder Lage, insbesondere Neigung, des Objektes (2) umfaßt.

**18.** Verfahren nach einem der vorhergehenden Ansprüche, bei dem die von den einzelnen Basisstationen (1) ermittelten Zeitdifferenzen auf ihre Konsistenz zur bestimmten Position überprüft werden, und abhängig von der Konsistenz jeweils ein Gewichtungswert für die Zeitdifferenzen verändert wird, der die Gewichtung der jeweiligen Zeitdifferenz für die Positionsbestimmung angibt.

**19.** Verfahren nach Anspruch 18, bei dem abhängig von einer geschätzten Position des Objekts (2) den Meßdaten der einzelnen Basisstationen (1) ein Streckenversatz zugeordnet wird und die Konsistenz dieses zugeordneten Streckenversatzes bestimmt wird.

**20.** Verfahren nach Anspruch 18 oder 19, bei dem die Gewichtungswerte abhängig von der geschätzten Position des Objektes (2) eingestellt werden.

**21.** Verfahren nach einem der vorhergehenden Ansprüche, bei dem aus der bestimmten Position der Ort und die Art der Bewegung eines Teilnehmers in einem Wettkampf ermittelt wird, und ein Frühstart des Teilnehmers der Rennleitung gemeldet wird, insbesondere indem ein Startsignal zur Signalisierung des Wettkampfbeginns blockiert wird, wenn der Teilnehmer in einen definierten Bereich zeitlich vor Signalisierung des Wettkampfbeginns gelangt, oder indem erkannt wird, daß die Art der Bewegung des Teilnehmers nicht mehr der vorgeschriebenen Art der Bewegung für den Wettkampfbeginn entspricht.

**22.** Verfahren nach einem der vorhergehenden Ansprüche, bei dem die räumliche Lage eines Objektes (1) mittels mehrerer am Objekt (1) angebrachter Objekttransponder ermittelt wird, wobei die Positionen der mehreren Objekttransponder zeitnah gemessen werden, und die Lage des Objekts aus den zeitnah gemessenen Positionen bestimmt wird.

**23.** Verfahren nach einem der vorhergehenden Ansprüche, bei dem aus den bestimmten Positionen und zugehörigen Zeitstempeln Streckenzeiten eines Teilnehmers ermittelt werden, und die Geschwindigkeit eines Teilnehmers mit derjenigen eines Referenzteilnehmers kontinuierlichen verglichen wird.

**24.** Positionsbestimmungssystem zum Bestimmen der Position eines Objektes (2), mit:

- einem Referenzobjekt (4) mit bekannter Position, das einen Referenzobjektsender zum Senden eines Referenzsignals aufweist;
- einer Anzahl von Basisstationen (1) mit bekannten Positionen, die jeweils eine Empfangseinrichtung zum Empfangen des Referenzsignals und eines Objektsignals sowie eine Zeitmeßeinheit zum Ermitteln der Zeitdifferenzen zwischen den Empfangszeitpunkten des Referenzsignals und des Objektsignals umfassen,
- einer Haupt-Basisstation (3), die eine Sendeeinrichtung zum Senden eines Aktivierungssignals, ausgelöst durch den Empfang des Referenzsignals durch ihre Empfangseinrichtung aufweist;
- einer am Objekt angeordneten Sende-/Empfangseinrichtung zum Empfangen des Aktivierungssignals und zum Senden des Objektsignals ausgelöst durch das Aktivierungssignal;
- einer Auswerteeinheit (7) zum Bestimmen der Position des Objektes aus den bekannten Positionen der Basisstationen (1) und des Referenzobjektes (4) sowie aus den gemessenen Zeitdifferenzen;

**dadurch gekennzeichnet, daß** die Auswerteeinheit (7) derart ausgestaltet ist, daß sie die Position des Objektes (2) unter Berücksichtigung eines Zeitversatzes bestimmt, der im wesentlichen der unbekannten Zeitdauer zwischen dem Empfangszeitpunkt des Referenzsignals und dem Sendezeitpunkt des Aktivierungssignals in der Haupt-Basisstation (1) und der unbekannten Zeitdauer zwischen dem Empfangszeitpunkt des Aktivierungssignals und dem Sendezeitpunkt des Objektsignals im Objekt (2) entspricht.

**25.** Positionsbestimmungssystem nach Anspruch 24, bei dem die Basisstationen (1) und die Hauptbasisstation (1) jeweils mehrere Antennen (19-21) mit verschiedenen Antennencharakteristiken und/oder Ausrichtungen umfassen, die selektiv mit ihren Empfangs- und/oder Sendeeinrichtungen verbunden werden können.

**26.** Positionsbestimmungssystem nach Anspruch 25, bei dem die Basisstationen (1) und die Hauptbasisstation (1) jeweils einen Leistungsmischer (17) umfassen, der die Signale von zwei Antennen (20, 21) einer Basisstation (1) zusammenführt, wobei eine (20) dieser Antennen (20, 21) auf das Objekt (2) und die andere (21) auf das Referenzobjekt (4) ausgerichtet ist.

**27.** Positionsbestimmungssystem nach Anspruch 25 oder 26, bei dem das Referenzobjekt (4) mehrere Antennen (19, 20) mit verschiedenen Antennencharakteristiken und/oder Ausrichtungen umfaßt, die selektiv mit seiner Sende-/Empfangseinrichtung verbunden werden können.

**28.** Positionsbestimmungssystem nach einem der Ansprüche 25 bis 27, bei dem das Objekt (2) mehrere Antennen an verschiedenen Positionen umfaßt, die selektiv mit seiner Sende-/Empfangseinrichtung verbunden werden können.

1
1
1
5
5
5
8
8
8
2
4
7
3
8
6
1
8
1
8
1
5
5
5

FIGUR 1

$z^{(obj)}$
y
$||L^{(i)}||$
$e^{(i)}$
$c\ t_{diff}^{(i)}$
$||z^{(ref)}-z^{(i)}||$
2
$z^{(ref)}$
$z^{(i)}$
1


FIGUR 2

10
Stationsauswahleinheit
Messung
11
Dopplerkorrektureinheit
12
Messwertbewertungseinheit
13
Verarbeitungseinheit
14
Plausibilitätsprüfeinheit
15
Verfolgereinheit
16
Sensoren

FIGUR 3

4
18
1
18
2
20
19
20
21
17
20

FIGUR 4

Europäisches Patentamt

# EUROPÄISCHER RECHERCHENBERICHT

Nummer der Anmeldung
EP 04 02 8453

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | US 2003/069025 A1 (HOCTOR RALPH THOMAS ET AL) 10. April 2003 (2003-04-10)<br>* Zusammenfassung; Abbildung 1 *<br>* Absatz [0024] - Absatz [0028] *<br>* Absatz [0066] - Absatz [0095] * | 1-12, 14-25, 27,28 | G01S5/06 |
| D,Y | WO 02/37134 A (ABATEC-ELECTRONIC AG; NIEDERNDORFER, FRIEDRICH) 10. Mai 2002 (2002-05-10)<br>* Seite 13, Zeile 30 - Seite 15, Zeile 25 * | 1-12, 14-25, 27,28 | |
| Y | WO 2004/081602 A (MENACHE, LLC) 23. September 2004 (2004-09-23)<br>* Zusammenfassung; Abbildung 1 *<br>* Seite 10, Zeile 21 - Seite 11, Zeile 27 *<br>* Seite 56, Zeile 23 - Seite 58, Zeile 4 * | 1-12, 14-25, 27,28 | |
| A | GB 2 330 716 A (* MOTOROLA LIMITED) 28. April 1999 (1999-04-28)<br>* das ganze Dokument * | 1-28 | RECHERCHIERTE SACHGEBIETE (Int.Cl.7)<br>G01S |

Der vorliegende Recherchenbericht wurde für alle Patentansprüche erstellt

| Recherchenort | Abschlußdatum der Recherche | Prüfer |
|---|---|---|
| München | 15. April 2005 | Lopez de Valle, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

2

## ANHANG ZUM EUROPÄISCHEN RECHERCHENBERICHT ÜBER DIE EUROPÄISCHE PATENTANMELDUNG NR.

EP 04 02 8453

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-2005

| Im Recherchenbericht angeführtes Patentdokument | Datum der Veröffentlichung | Mitglied(er) der Patentfamilie | Datum der Veröffentlichung |
|---|---|---|---|
| US 2003069025 A1 | 10-04-2003 | DE 10246922 A1 | 08-05-2003 |
| | | JP 2003189353 A | 04-07-2003 |
| | | US 2004002347 A1 | 01-01-2004 |
| WO 0237134 A | 10-05-2002 | DE 10053959 A1 | 13-06-2002 |
| | | AU 2178502 A | 15-05-2002 |
| | | WO 0237134 A2 | 10-05-2002 |
| | | EP 1334372 A2 | 13-08-2003 |
| WO 2004081602 A | 23-09-2004 | US 2004017313 A1 | 29-01-2004 |
| | | US 2004178955 A1 | 16-09-2004 |
| | | WO 2004081602 A2 | 23-09-2004 |
| GB 2330716 A | 28-04-1999 | KEINE | |

EPO FORM P0461

Für nähere Einzelheiten zu diesem Anhang : siehe Amtsblatt des Europäischen Patentamts, Nr.12/82